# EUROPÄISCHE PATENTANMELDUNG

(11) **EP 1 462 309 A2**
(43) Veröffentlichungstag der Anmeldung: **29.09.2004**
(21) Anmeldenummer: 04006763.9
(22) Anmeldetag: 20.03.2004
(51) Int. Cl.: B60Q 1/12, B60Q 1/22

(54) **Scheinwerfereinrichtung für ein Kraftfahrzeug**

(30) Priorität: 27.03.2003 DE 10313731
(71) Anmelder: ADAM OPEL AG, 65423 Rüsselsheim (DE)
(72) Erfinder: Lachenmaier, Thorsten, 55424 Münster-Sarmsheim (DE)

(57) **Zusammenfassung**

Eine Scheinwerfereinrichtung für ein Kraftfahrzeug umfasst mindestens eine Abblendlichtfunktion, eine Fernlichtfunktion und eine Kurvenlichtfunktion, wobei die Kurvenlichtfunktion durch ein bewegliches und/oder ein statisches Kurvenlicht (11, 12) realisiert ist, das bewegliche Kurvenlicht (11) entsprechend einem Lenkeinschlag dem Kurvenverlauf folgt und das statische Kurvenlicht (12) bei Vorwärtsfahrt zugeschaltet ist, um auf der Kurveninnenseite einen Bereich seitlich vor dem Kraftfahrzeug (20) auszuleuchten. Ein Einparklicht ist bei Rückwärtsfahrt und Lenkeinschlag zum Ausleuchten eines Bereichs seitlich vor dem Kraftfahrzeug (20) zugeschaltet.

## Beschreibung

Die Erfindung bezieht sich auf eine Scheinwerfereinrichtung für ein Kraftfahrzeug mit mindestens einer Abblendlichtfunktion, einer Fernlichtfunktion und einer Kurvenlichtfunktion, wobei die Kurvenlichtfunktion durch ein bewegliches und/ oder ein statisches Kurvenlicht realisiert ist, das bewegliche Kurvenlicht entsprechend einem Lenkeinschlag dem Kurvenverlauf folgt und das statische Kurvenlicht bei Vorwärtsfahrt zugeschaltet ist, um auf der Kurveninnenseite einen Bereich seitlich vor dem Kraftfahrzeug auszuleuchten.

Bei der in Rede stehenden AFL(Adaptive Forward Light)-Scheinwerfereinrichtung steht dabei im Vordergrund zur Steigerung der Verkehrssicherheit bei reduzierten Sichtverhältnissen eine verbesserte Ausleuchtung des vor dem Kraftfahrzeug liegenden Kurvenverlaufs zu schaffen. Bei kurvenförmigen Rückwärtsfahrten, wie z.B. beim Einparken in schlecht ausgeleuchtete und enge Parklücken, steht dem Nutzer allerdings kein entsprechendes Hilfsmittel zur Verfügung, um Abstände seines Fahrzeugs zu im Umfeld befindlichen Hindernissen sicher zu erkennen.

Aus der DE 36 35 473 A1 ist ein Kraftfahrzeugaussenspiegel mit einer Einparkleuchte bekannt, die beim Einlegen des Rückwärtsgangs eingeschaltet wird. Dabei wird der seitlich an das Hinterrad angrenzende Außenbereich des Kraftfahrzeuges mit einem eng begrenzten Lichtbündel beleuchtet. Beschädigungen beim Einparken treten aber oft im Bereich der Vorderräder auf. Beim rückwärtigen Einparken zwischen zwei am Fahrbahnrand abgestellten Kraftfahrzeugen muss z.B. abgeschätzt werden, wann (also auf welcher Höhe eines parkenden Kraftfahrzeuges) der Lenkeinschlag erfolgen soll, um Beschädigungen durch Einschwenken der vorderen Karosserie zu vermeiden. Ein nach vorn verbesserter Überblick beim Rückwärtsfahren ist mit den Mitteln dieser Druckschrift nicht zu erreichen.

Des Weiteren zeigt die DE 36 02 993 A1 eine Doppelzweckleuchte für ein Kraftfahrzeug, die als kombinierte Nebel- und Kurvenleuchte einsetzbar ist. Um dies zu erreichen, wird ein beweglicher Reflektor zwischen zwei Stellungen verfahren, um das Licht entsprechend zu lenken. Dieser Druckschrift sind ebenfalls keine Mittel zu entnehmen, welche beim Rückwärtsfahren einen verbesserten Überblick nach vorn gewährleisten.

Darüber hinaus ist aus der DE 198 43 817 A1 eine Scheinwerfereinheit für ein Kraftfahrzeug bekannt, bei der ein Kurvenlicht und ein Abblendlicht in zwei getrennten Lichteinheiten erzeugbar sind. Auch dieser Druckschrift ist nichts zu entnehmen, wie der Überblick beim Rückwärtsfahren verbessert werden kann.

Es ist Aufgabe der Erfindung, eine Scheinwerfereinrichtung für ein Kraftfahrzeug der eingangs genannten Art zu schaffen, die dem Nutzer eine gute Erkennung von Hindernissen beim Rückwärtsfahren unter reduzierten Lichtverhältnissen erlaubt und die konstruktiv einfach aufgebaut sowie kostengünstig ist.

Erfindungsgemäß wird die Aufgabe bei der gattungsgemäßen Scheinwerfereinrichtung dadurch gelöst, dass ein Einparklicht bei Rückwärtsfahrt und Lenkeinschlag zum Ausleuchten eines Bereichs seitlich vor dem Fahrzeug zugeschaltet ist.

Mit dem Einparklicht werden beim Rangieren im z.B. im Dunkeln Hindernisse schräg vor und seitlich vom Kraftfahrzeug sichtbar, die bei Systemen aus dem Stand der Technik so nicht zu erkennen sind. Ein potentielles Unfallrisiko wird damit deutlich verringert.

Das Einparklicht kann durch getrennt vom AFL angebrachte Kurvenleuchten (Cornering Lamps) erzeugt werden, wobei eine Signalkopplung zwischen Getriebe und Einparklicht z.B. über eine elektrische Leitung oder einen KFZ-Bus (CAN, LIN) erfolgt. Besonders einfach gestaltet sich eine Kopplung mit schon vorhandenen Funktionskomponenten, wie z.B. den Rückfahrleuchten, welche ebenfalls bei Rückwärtsfahrt eingeschaltet werden.

Bevorzugt ist das Einparklicht beidseitig am Kraftfahrzeug zugeschaltet. Damit sind dem Nutzer zusätzliche optische Informationen von der rechten und linken Vorderseite des Kraftfahrzeuges zugänglich, die z.B. ein Einparken erleichtern. Ein Umschalten zwischen den beiden Einparklichtern ist nicht notwendig.

Nach einer Weiterbildung der Erfindung ist das statische Kurvenlicht das Einparklicht. Dem Einparklicht liegt damit das AFL zu Grunde. Eine Teilfunktion des AFL, nämlich die im Scheinwerfer befindlichen statischen Kurvenleuchten, wird somit als Einparkhilfe genutzt. Durch die Verfügbarkeit des statischen Kurvenlichts als Teil des AFL ist eine besonders einfache Realisierung gegeben. Mit dem statischen Kurvenlicht, zugeschaltet beim Einlegen des Rückwärtsgangs, können Gegenstände und Hindernisse im Bereich schräg vor und seitlich neben dem Kraftfahrzeug frühzeitig erkannt werden.

In alternativer Ausgestaltung des Erfindungsgedankens ist das bewegliche Kurvenlicht das Einparklicht. Hierbei ist es möglich das für die Abblendlichtfunktion vorgesehene verschwenkbare Abblendlicht der AFL-Scheinwerfereinrichtung oder ein zusätzliches bewegliches Kurvenlicht als das Einparklicht zu nutzen. Das bewegliche, also das dynamische Kurvenlicht kann in seiner Funktion als Einparklicht beispielsweise in einer endlagenbestimmenden Anschlagstellung betrieben werden, um den Bereich seitlich und schräg vor dem Kraftfahrzeug auszuleuchten.

Zweckmäßigerweise ist eine Signalkopplung zwischen Getriebe und Einparklicht über das Steuergerät der Scheinwerfereinrichtung (im Folgenden auch AFL-Steuergerät) vorgesehen. Da die Information des eingelegten Rückwärtsganges auf dem KFZ-Bus verfügbar ist, an dem auch das AFL-Steuergerät angeschlossen ist, kann dieses das Signal auswerten und ein Ein- bzw. Ausschalten des Einparklichts veranlassen.

Weiterhin ist bevorzugt eine Signalkopplung zwischen Getriebe und Einparklicht über Rückfahrleuchten des Kraftfahrzeuges vorgesehen. Die Rückfahrleuchten werden eingeschaltet, wenn der Rückwärtsgang eingelegt wird. Damit steht ein Signal zur Verfügung, welches besonders einfach auch zum Einschalten des Einparklichts ausgewertet werden kann.

Nach einer vorteilhaften Ausgestaltung der Erfindung wird bei einem Verfahren zum Betreiben der erfindungsgemäßen Scheinwerfereinrichtung mit Einlegen des Rückwärtsgangs das Einparklicht zugeschaltet. Das Einparklicht kann von einer vom AFL getrennten Einparkleuchte oder durch eine in der AFL-Scheinwerfereinrichtung vorgesehene statische Kurvenleuchte erzeugt werden. Dessen übliche Funktion, nach der es bei Vorwärtsfahrt und Lenkeinschlag auf der entsprechenden Fahrzeugseite aufleuchtet, bleibt unberührt. Das statische Kurvenlicht bietet einen zusätzlichen Leuchtkegel zum Abblendlicht und leuchtet den Bereich seitlich und schräg vor dem Kraftfahrzeug aus.

Nach einer Weiterbildung des Erfindungsgedankens beginnt mit Verlassen des Rückwärtsgangs eine vorbestimmte Verzögerungszeit, nach deren Ablauf das Einparklicht ausgeschaltet wird. Damit steht das Einparklicht auch zur Verfügung, wenn vor- und zurückrangiert werden muss und erlischt erst, wenn der Rückwärtsgang schon einige Zeit verlassen wurde. Die Verzögerungszeit kann als eine elektrische Verzögerungsschaltung mit herkömmlichen Bauelementen oder auch softwaretechnisch realisiert sein.

Vorteilhafterweise wird nach dem Verlassen des Rückwärtsgangs das Einparklicht ausgeschaltet, wenn eine vorbestimmte Fahrzeuggeschwindigkeit überschritten ist. Damit erlischt das Einparklicht erst, wenn z.B. beim Parken das Kraftfahrzeug verlassen, d.h. die Zündung auf "Aus" gestellt wird, oder wenn z.B. beim Wegfahren die Geschwindigkeit des Kraftfahrzeuges über einen vorbestimmten Grenzwert steigt.

Vorzugsweise wird die Auswertung der Verzögerungszeit und/oder der Geschwindigkeit an dem Steuergerät der Scheinwerfereinrichtung vorgenommen. Insbesondere dann, wenn auch eine Signalkopplung zwischen Getriebe und Einparkleuchte über das AFL-Steuergerät realisiert ist, entsteht dort die Möglichkeit einer Funktionsbündelung. Diese ist hinsichtlich Soft- und Hardware einfach und kostengünstig umzusetzen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

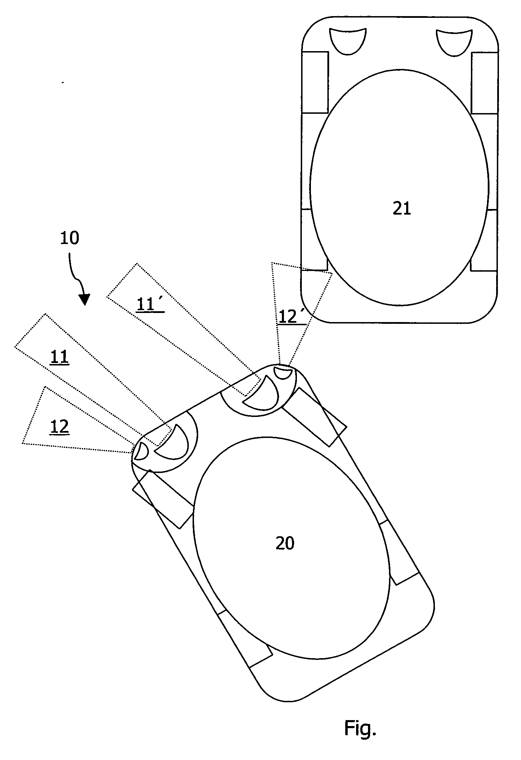

Die Erfindung wird im Folgenden anhand eines Ausführungsbeispiels unter Bezugnahme auf die zugehörige Zeichnung näher erläutert. Die einzige Fig. zeigt eine Draufsicht auf zwei schematisch dargestellte Kraftfahrzeuge, von denen das rückwärts hinter das andere einparkende Kraftfahrzeug mit einer erfindungsgemäßen Scheinwerfereinrichtung ausgestattet ist.

Das einparkende Kraftfahrzeug 20 ist mit einer AFL-Scheinwerfereinrichtung ausgestattet, deren Kurvenlicht 10 ein beidseits des Kraftfahrzeuges 20 erzeugtes bewegliches Kurvenlicht 11, 11' und ein statisches Kurvenlicht 12, 12' umfasst. Das Kraftfahrzeug 20 parkt mit eingelegtem Rückwärtsgang und Lenkeinschlag nach unten hinter das parkende Kraftfahrzeug 21 ein, wobei die beweglichen Kurvenlichter 11, 11' einem fiktiven Kurvenverlauf folgend nach links oben zeigen und die statischen Kurvenlichter 12, 12' Bereiche seitlich und vor dem Kraftfahrzeug 20 ausleuchten. Dadurch wirken sie als Einparklichter, welche dem Fahrer des Kraftfahrzeuges 20 eine sichere Erkennung des Abstands zwischen dem rechtem Kotflügel seines Kraftfahrzeuges 20 und dem Heck des Kraftfahrzeuges 21 erlauben.

Eine Unfallgefahr durch Einschwenken der vorderen Karosserie des Kraftfahrzeuges 20 wird damit sicher ausgeschlossen. Durch die Verwendung der AFL-Scheinwerfereinrichtung mit statischem Kurvenlicht sind keine getrennten Einparkleuchten am Kraftfahrzeug 20 notwendig.

### Bezugszeichenliste

- 10: Kurvenlicht
- 11, 11': bewegliches Kurvenlicht
- 12, 12': stationäres Kurvenlicht
- 20: einparkendes Fahrzeug
- 21: geparktes Fahrzeug

## Patentansprüche

1. Scheinwerfereinrichtung für ein Kraftfahrzeug mit mindestens einer Abblendlichtfunktion, einer Fernlichtfunktion und einer Kurvenlichtfunktion, wobei die Kurvenlichtfunktion durch ein bewegliches und/oder ein statisches Kurvenlicht (11, 12) realisiert ist, das bewegliche Kurvenlicht (11) entsprechend einem Lenkeinschlag dem Kurvenverlauf folgt und das statische Kurvenlicht (12) bei Vorwärtsfahrt zugeschaltet ist, um auf der Kurveninnenseite einen Bereich seitlich vor dem Kraftfahrzeug (20) auszuleuchten, **gekennzeichnet durch** ein Einparklicht, dass bei Rückwärtsfahrt und Lenkeinschlag zum Ausleuchten eines Bereichs seitlich vor dem Kraftfahrzeug (20) zugeschaltet ist.

2. Scheinwerfereinrichtung nach Anspruch 1, **dadurch gekennzeichnet, dass** das Einparklicht beidseitig am Kraftfahrzeug (20) zugeschaltet ist.

3. Scheinwerfereinrichtung nach Anspruch 1 oder 2, **dadurch gekennzeichnet, dass** das statische Kurvenlicht (12) das Einparklicht ist.

4. Scheinwerfereinrichtung nach Anspruch 1 oder 2, **dadurch gekennzeichnet, dass** das bewegliche Kurvenlicht (11) das Einparklicht ist.

5. Scheinwerfereinrichtung nach einem der Ansprüche 1 bis 4, **dadurch gekennzeichnet, dass** eine Signalkopplung zwischen Getriebe und Einparklicht über ein Steuergerät der Scheinwerfereinrichtung vorgesehen ist.

6. Scheinwerfereinrichtung nach einem der Ansprüche 1 bis 5, **dadurch gekennzeichnet, dass** eine Signalkopplung zwischen Getriebe und Einparklicht über Rückfahrleuchten des Kraftfahrzeuges (20) vorgesehen ist.

7. Verfahren zum Betreiben einer Scheinwerfereinrichtung nach einem der Ansprüche 1 bis 6, **dadurch gekennzeichnet, dass** mit Einlegen des Rückwärtsgangs das Einparklicht zugeschaltet wird.

8. Verfahren zum Betreiben einer Scheinwerfereinrichtung nach Anspruch 7, **dadurch gekennzeichnet, dass** mit Verlassen des Rückwärtsgangs eine vorbestimmte Verzögerungszeit beginnt, nach deren Ablauf das Einparklicht ausgeschaltet wird.

9. Verfahren zum Betreiben einer Scheinwerfereinrichtung nach Anspruch 7 oder 8, **dadurch gekennzeichnet, dass** nach dem Verlassen des Rückwärtsgangs das Einparklicht ausgeschaltet wird, wenn eine vorbestimmte Fahrzeuggeschwindigkeit überschritten ist.

10. Verfahren zum Betreiben einer Scheinwerfereinrichtung nach Anspruch 8 oder 9, **dadurch gekennzeichnet, dass** die Auswertung der Verzögerungszeit und/oder der Geschwindigkeit an dem Steuergerät der Scheinwerfereinrichtung vorgenommen wird.
